# EUROPÄISCHE PATENTSCHRIFT

(11) **EP 0 819 309 B1**
(45) Veröffentlichungstag und Bekanntmachung des Hinweises auf die Patenterteilung: **10.11.1999**
(21) Anmeldenummer: 96907992.0
(22) Anmeldetag: 19.03.1996
(51) Int. Cl.: G21C 9/016

(54) **EINRICHTUNG ZUM AUFFANGEN VON KERNSCHMELZE AUS EINEM REAKTORDRUCKBEHÄLTER**
DEVICE FOR CATCHING MELT-DOWN PRODUCTS FROM A REACTOR PRESSURE VESSEL
INSTALLATION POUR COLLECTER LE COEUR EN FUSION D'UNE CUVE DE REACTEUR

(30) Priorität: 05.04.1995 DE 19512287
(43) Veröffentlichungstag der Anmeldung: 21.01.1998
(73) Patentinhaber: SIEMENS AKTIENGESELLSCHAFT, 80333 München (DE)
(72) Erfinder: FISCHER, Manfred, D-91054 Erlangen (DE); BITTERMANN, Dietmar, D-90765 Fürth (DE); WISTUBA, Lothar, D-91074 Herzogenaurach (DE); WEISSHÄUPL, Horst, D-91074 Herzogenaurach (DE)
(86) Internationale Anmeldenummer: DE9600478
(87) Internationale Veröffentlichungsnummer: WO9631884

(56) Entgegenhaltungen:
- EP-A- 0 541 167
- DE-A- 4 306 864
- DE-A- 4 319 094
- FR-A- 2 336 772
- FR-A- 2 616 578
- GB-A- 2 103 657

## Beschreibung

Die Erfindung bezieht sich auf eine Einrichtung zum Auffangen und Kühlen von Kernschmelze aus einem Reaktordruckbehälter (RDB). Sie ist insbesondere beim EPR-Druckwasserreaktor einsetzbar.

Aus der DE 43 19 094 A1 ist eine Einrichtung zum Auffangen und Kühlen von Kernschmelze eines RDB bekannt, bei der unterhalb des RDB eine Vorkammer angeordnet ist, die über einen Kanal mit einer Ausbreitungskammer verbunden ist. Der Kanal weist reaktorseitig eine Schott- oder Trennwand auf, die in einer vorgegebenen Zeitspanne nach dem Eintreffen der Kernschmelze von dieser zerstört wird. Die Vorkammer ist etwa kegelstumpfförmig ausgebildet und ist nach unten hin von einem feuerfesten Betonsockel begrenzt, der quasi als Tiegel dient. Der Betonsockel soll aus einer feuerfesten Keramik oder speziellen Steinen hergestellt sein. Das Material wirkt dabei vorzugsweise, wenn es sich mit der Kernschmelze legiert, schmelzpunkterniedrigend, so daß es die Kernschmelze dünnflüssiger macht. Der Boden der Ausbreitungskammer ist mit einem warmeresistenen Material belegt.

Aus der DE 43 06 864 C2 ist eine Anordnung für die Sicherung eines Kernreaktors bekannt, bei der unterhalb des Reaktordruckgefäßes eine Auffangeinrichtung für die Kernschmelze an) geordnet ist. Die Auffangeinrichtung ist dabei ein Bauwerk aus Kokillenelementen aus Gußeisen und/oder Gußstahl, die eir Ablaufsystem für die Kernschmelze bilden. Die Auffangeinrichtung entspricht dabei im Vergleich zum obengenannten Stand der Technik der dortigen Ausbreitungskammer, die dort seitlich neben dem RDB angeordnet ist. Eine Vorkammer ist bei dieser Anordnung nicht gegeben. Die Auffangeinrichtung aus Metall dient offenbar dazu, die aufgefangene Kernschmelze in einer Lagerkammer abzukühlen. Bei einer nach und nach herunterlaufenden Kernschmelze kann durch eine zu starke Kühlung gegebenenfalls ein Verstopfen der Zulaufkanale auftreten. Auf diese Weise ist ein Nachkühlen verhindert, wodurch gegebenenfalls weiterer Schaden entstehen kann.

Aus der DE-OS 2 234 782 ist ein Reaktorkernbehälter bekannt, bei dem unterhalb der Brennelemente eine Wanne zum Auffangen des Kerns im Falle einer Kernschmelze angeordnet ist. Zum Abkühlen ist die Wanne auf der dem Kern abgewandten Seite nach Art eines Kühlkörpers rippenartig ausgestaltet und mit dem Wasser eines Kühlkreislaufs in Kontakt. Auf diese Weise kann die Kernschmelze abgekühlt werden. Die Wanne ist dabei innerhalb des RDB's angeordnet.

Der Erfindung liegt die Aufgabe zugrunde, bei einer Einrichtung zum Auffangen und Kühlen von Kernschmelze aus einem RDB einen verbesserten Ablauf der Kernschmelze in seine Ausbreitungskammer zu erzielen.

Die Aufgabe wird erfindungsgemäß gelöst mit einer Einrichtung zum Auffangen von Kernschmelze gemäß Anspruch 1.

Auf diese Weise bildet die Kernschmelze auf dem Sockelkörper zunächst ein Kruste, die als Eigentiegel wirkt. Dadurch ist zunächst der Sockelkörper vor Beschädigungen geschützt. Dies wird durch die gute Wärmeabfuhr des Sockelkörpers erzielt. Der Eigentiegel wirkt für die übrige Kernschmelze isolierend, so daß diese ihre Konsistenz (Flüssigkeit) zunächst beibehält. Nach dem Öffnen der Schottwand fließt dann die Kernschmelze kontinuierlich oder stetig in die Ausbreitungskammer. Es soll dabei möglichst der gesamte Kern in einem Zug aus der Vorkammer in die Ausbreitungskammer fließen.

Bevorzugt ist der Sockelkörper aus Metall gefertigt. Dadurch ist die gewünschte Wärmeleitfähigkeit hergestellt, was zu einer guten Krustenbildung führt. Der Sockelkörper kann aus Teilkörpern zusammengesetzt sein. Dadurch ist die Einrichtung einfach transportierbar und leicht zu installieren.

Es ist günstig, wenn der Sockelkörper vorkammerseitig tiegelartig ausgestaltet ist. Dadurch ist eine Gefäßstruktur geschaffen, die eine günstige warmetechnische Handhabung der Kernschmelze erlaubt.

Bevorzugt weist der Sockelkörper Kühlmittel auf. Dadurch ist ein Anschmelzen oder Beschädigen des Sockelkörpers verhindert. Zusätzlich ist auch eine thermische Überlastung im Langzeitbereich verhindert.

Zumindest die Vorkammer und gegebenenfalls der Kanal können mit Füllkörpern ausgefüllt sein. Eine zusätzliche Belastung der Vorkammer durch eine Dampfexplosion ist damit ebenfalls vermieden.

Es ist günstig, wenn die Bodenflächen von Kanal und/oder Ausbreitungsraum von gekühlten Bodenelementen gebildet sind. Auf diese Weise ist eine gute Abfuhr der Restwärme möglich. Derartige Bodenelemente lassen sich einfach verlegen, wobei sie zusätzlich einen Ausgleich bei Temperaturschwankungen bieten. Für eine gute Dichtigkeit gegenüber dem Kühlmedium weisen sie an ihren Verbindungsstellen Nut- und Federverbindungen oder eine stufenartige Verbindung auf. Dabei kann mit Vorteil auch eine flexible Dichtung zwischengeschaltet sein. Somit ist eine gute mechanische Verbindung und eine Flüssigkeitsabdichtung gegeben. Weitere vorteilhafte Ausgestaltungen sind in den übrigen Ansprüchen angegeben.

Die Erfindung, weitere Details und Vorteile werden nachfolgend anhand von Ausführungsbeispielen und der Zeichnung näher erläutert. Es zeigen:
- FIG 1: eine Reaktorgrube im Längsschnitt mit einem darin angeordneten RDB entlang der Linie A-A von FIG 3;
- FIG 2: die Reaktorgrube in einem Schnitt entlang der Linie B-B von FIG 1;
- FIG 3: die Reaktorgrube in einem Schnitt entlang der Linie C-C von FIG 1;
- FIG 4: eine alternative Ausbreitungskammer im Schnitt entlang der Linie C-C aus FIG 6;
- FIG 5: die alternative Ausbreitungskammer im Schnitt entlang der Linie B-B aus FIG 6;
- FIG 6: die alternative Ausbreitungskammer im Schnitt entlang der Linie A-A aus FIG 4;
- FIG 7: ein Bodenelement entsprechend Detail X aus FIG 6;
- FIG 8: ein alternatives Bodenelement zu dem aus FIG 7;
- FIG 9: eine noch weitere Alternative zum Bodenelement aus FIG 8
- FIG 10 bis 13: Alternativen für die Verbindungsstruktur zwischen den Bodenelementen entsprechend Detail Z;

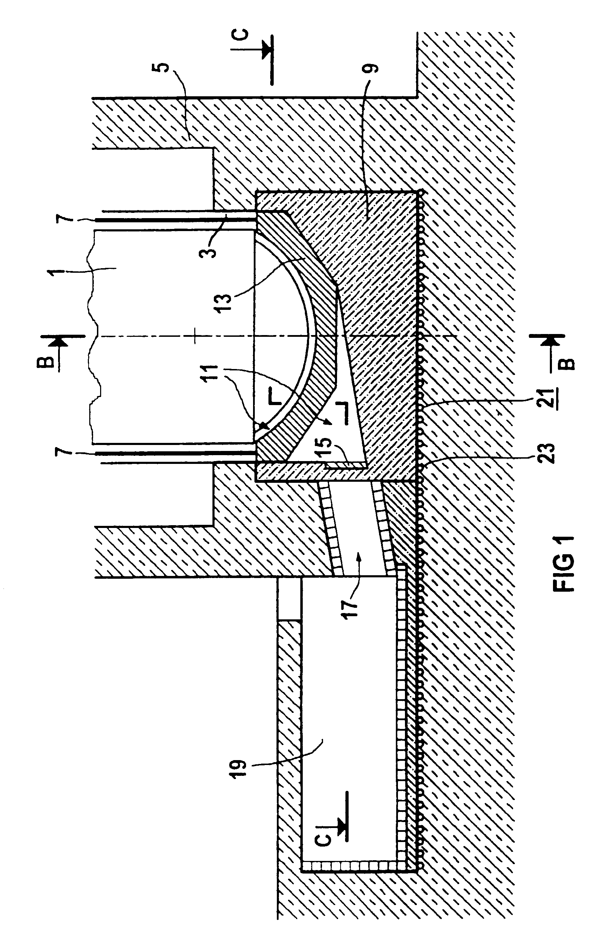

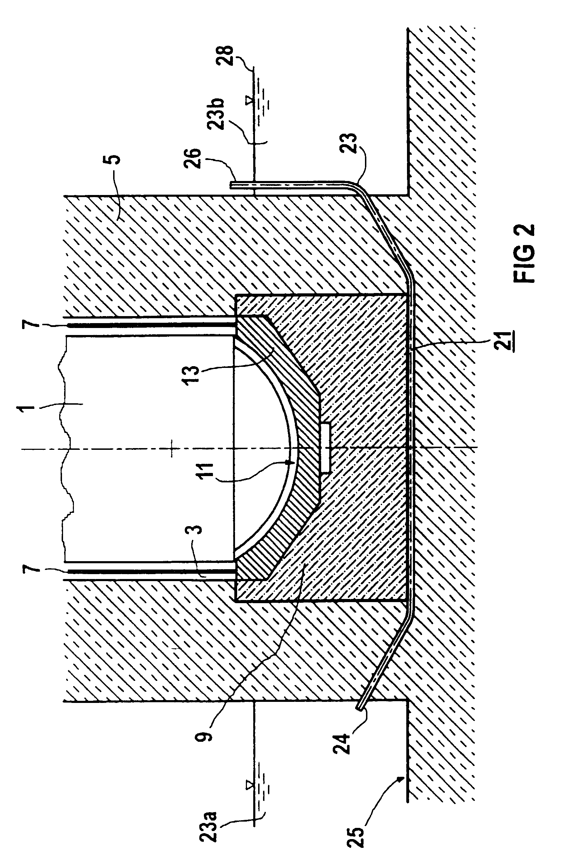

FIG 1 und 2 zeigen einen Reaktordruckbehälter (RDB) 1, der in einer Reaktorgrube 3 angeordnet ist. Die Reaktorgrube 3 ist dabei von einer Betonstruktur 5 gebildet. Zwischen der Wand der Reaktorgrube 3 und dem RDB ist eine Isolierung 7 angeordnet, die den RDB 1 umgibt. Der RDB 1 enthält einen nicht näher dargestellten wassergekühlten Reaktorkern. Die Reaktorgrube 3 ist im oberen Teil zylindrisch und im unteren Teil gewölbt, speziell kegelstumpfförmig ausgebildet. Sie weist dabei eine tiegelartige Struktur auf. Die tiegelartige Ausbildung ist von einem Sockelkörper 9 gebildet. Der zwischen dem RDB 1 und dem Sockelkörper 9 verbleibende Zwischenraum, der als Vorkammer 11 zum Auffangen von Kernschmelze dient, ist mit einem Füllkörper 13 ausgestattet, der zum Verdrängen von Wasser aus der Vorkammer 11 dient. Auf diese Weise ist beim Austreten von heißer Kernschmelze eine Dampfexplosion verhindert.

Die Vorkammer 11 ist an ihrer tiefsten Stelle mit einer Schott- oder Trennwand 15 abgeschlossen. Die Schott- oder Trennwand 15 ist derart ausgebildet, daß sie nach einer vorgegebenen Zeit von der Kernschmelze durch Schmelzen zerstört wird, wodurch der Weg über einen Kanal 17 in eine Ausbreitungskammer 19 freigegeben ist. Die Ausbreitungskammer 19 ist dabei seitlich neben dem RDB 1 angeordnet. Die Ausbreitungskammer 19 dient hier quasi als Kühlraum und Endlager für die Kernschmelze. Nähere Details zur Funktion der Vorkammer 11, des Kanals 17 und der Ausbreitungskammer 19, sowie deren Bemessung sind aus der bereits obengenannten DE 43 19 094 Al bekannt und zu entnehmen.

Wesentlich für die vorliegende Idee sind die Ausgestaltungen des Sockelkörpers 9 und gegebenenfalls der Bodenbereiche von Ausbreitungskammer 19 und Kanal 17. Der Sockelkörper 9, der zumindest den Bodenbereich der Vorkammer 11 bildet (gegebenenfalls kann der Sockelkörper 9 auch den Bodenbereich des Kanals 17 bilden) ist aus einem Material hoher Wärmeleitfähigkeit gefertigt. Der Sockelkörper 9 ist dabei ringsum von der Betonstruktur 5 umgeben. Bevorzugt ist der Sockelkörper 9 aus einem Metall gefertigt, wodurch die hohe Wärmeleitfähigkeit gewährleistet ist. Es sind jedoch auch andere Materialien, z. B. eine hochdichte Keramik denkbar.

Der Sockelkörper 9 kann von einzelnen nicht näher gezeigten Sockelelementen gebildet sein, z. B. von kreissektor- oder kreisringsektorförmigen Elementen, die auch in Scheiben oder Lagen angeordnet sein können. Dadurch ist eine gute Transportierbarkeit gegeben.

Die Vorkammer 11 hat nun die Funktion, die austretende Kernschmelze zunächst zu sammeln. Dazu ist die Trenn- oder Schottwand 15 zunächst verschlossen. Sie muß daher derart bemessen sein, daß sie für einen Zeitraum von ca. 10 bis 30 Minuten in Funktion bleibt. Durch das Austreten der Kernschmelze wird der Füllkörper 13 zerstört, so daß sich die Kernschmelze in der Vorkammer 11 ausbreiten und sammeln kann.

Hier tritt die neue Funktion des Sockelkörpers 9 ein. Durch seine hohe Wärmeleitfähigkeit wird die an ihm anliegende Kernschmelze stark gekühlt, so daß diese eine Kruste bildet. Dadurch wird quasi ein Eigentiegel gebildet, in dem die Kernschmelze gehalten wird. Zusätzlich ist auch eine isolierende Wirkung für die Kernschmelze gegeben. Die Kühlung ist dabei derart dimensioniert, daß durch die isolierende Wirkung der Kruste sich ein ausreichend großes Volumen an Kernschmelze sich in der Vorkammer 11 sammelt.

Ziel ist es dabei, daß die gesamte Kernschmelze beim Zerstören der Schott- oder Trennwand 15 in einem Zug stetig aus der Vorkammer 11 in die Ausbreitungskammer 19 ausströmt. Dabei ist es günstig, wenn möglichst das gesamte Kerninventar abgeschmolzen ist und sich in der Vorkammer 11 oder in der Reaktorgrube 3 befindet. Der von der Kernschmelze gebildete Eigentiegel verhindert zusätzlich ein Angriff (Penetration) oder ein Zerstören des Sockelkörpers 9 und seiner Struktur. Gegebenenfalls kann - um den Zeitpunkt der Zerstörung der Schott- oder Trennwand 15 genauer zu bestimmen- eine spezielle Kühlung in oder an dieser Wand vorgesehen sein. Auf diese Weise ist der zeitliche Ablauf des gesamten Vorgangs besser steuerbar.

Zusätzlich kann -wie gezeigt- der Sockelkörper 9 an seiner Unterseite mit einer Kühlvorrichtung 21 versehen sein, die nach Art von eingelegten Kühlrohren oder Kühlschlangen ausgebildet ist. Die Kühlvorrichtung 21 kann sich auch weiter im Bodenbereich des Kanals 17 und der Ausbreitungskammer 19 erstrecken. Gegebenenfalls können jedoch auch für den Kanal 17 und die Ausbreitungskammer 19 zusätzliche oder alternative Kühlsysteme vorgesehen sein. Die Betonstruktur 5 breitet sich im übrigen im Bodenbereich unterhalb der Kühlvorrichtung 21 als Betonfundament aus.

In FIG 2 ist die Funktion der Kühleinrichtung 21 erkennbar. Zu beiden Seiten der Reaktorgrube 3 sind Kühlmittelreservoirs 23a und 23b angeordnet. Diese können auch miteinander verbunden oder auch von einem gemeinsamen Behälter gebildet sein. Das beispielhaft für weitere Kühlrohre der Einrichtung 21 gezeigte Kühlrohr 23 verläuft dabei mit seinem ersten Ende 24 vom niedrigen Bodenbereich 25 des ersten Kühlmittelreservoirs 23a in Kühlkontakt im oder unterhalb des Sockelkörpers 9 entlang in das zweite Kühlmittelreservoirs 23b. Das zweite Ende 26 der Kühlleitung ist dabei in einem hohen Niveau in dem zweiten Kühlmittelreservoirs 23b über dessen Wasserstandsfläche 28 angeordnet, so daß vom Reservoir 23b kein Kühlmittel in das erste Reservoir 23a zurückfließen kann.

Beim Erwärmen der Kühlflüssigkeit innerhalb des Kühlrohrs 23 am Sockelkörper 9 findet eine Dampfbildung statt, wobei durch den vom hohen Wasserniveau im ersten Kühlmittelreservoir 23a gebildete Wasserdruck der Dampf in das zweite Kühlmittelreservoir 23b entweicht, dort kondensiert und niederschlägt. Auf diese Weise ist ein gleichmäßiger Kühlmittelfluß in Richtung vom ersten Reservoir 23a zum zweiten Reservoir 23b gewährleistet. Die Kühleinrichtung 21 kann also ohne weitere Energiezufuhr passiv arbeiten. Der gegebenenfalls noch entstehende Dampf kann unter Umständen in die Atmosphäre des Containments abgeführt werden. Ist die Kühlwirkung im passiven Betrieb nicht ausreichend, so kann gegebenenfalls über nicht näher gezeigte Mittel eine zusätzliche aktive Kühlung, insbesondere für den Langzeitbereich, vorgesehen werden.

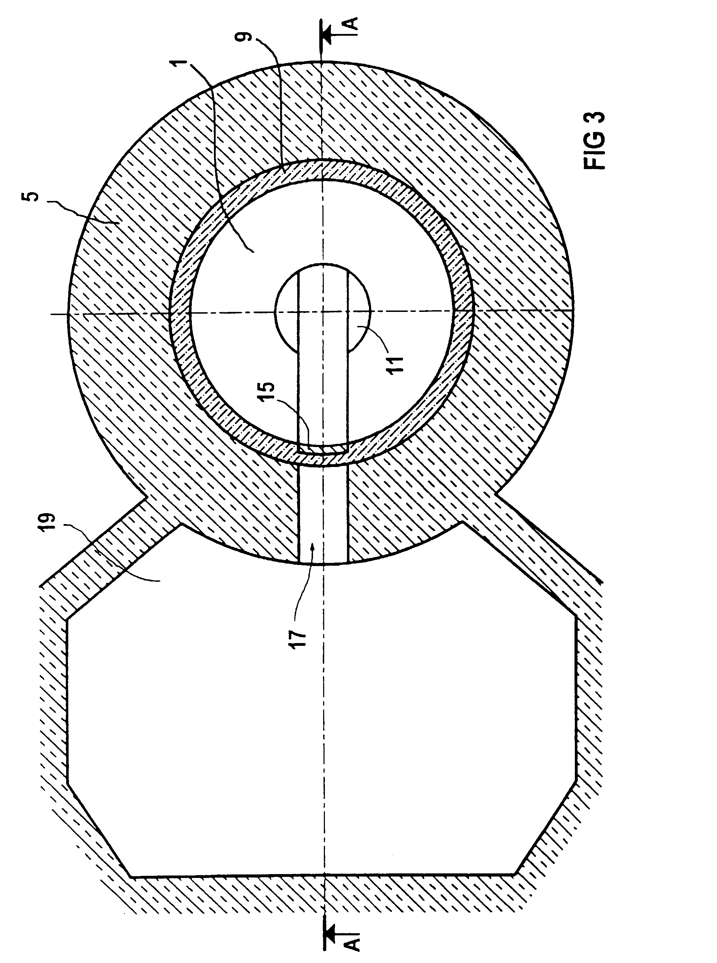

FIG 3 zeigt die Betonstruktur 5 in einem Querschnitt entlang der Linie C-C aus FIG 1. Hier ist der Kanal 17 zu erkennen, der die Vorkammer 11 mit der Ausbreitungskammer 19 verbindet. Die Ausbreitungskammer 19 hat dabei im wesentlichen eine rechteckige Form, wobei ihre Ecken angeschrägt sind. Ihre konstruktive Gestaltung ist derart, daß die plötzlich aus dem Kanal 17 heraustretende Kernschmelze sich schnell und flächendeckend ausbreiten kann, ohne daß eine Haufen- oder Staubildung entsteht. Der Boden der Ausbreitungskammer 19 ist relativ dünn gehalten, so daß eine starke Wärmeabfuhr durch die Kühleinrichtung 21 gegeben ist. Damit ist eine dauerhafte Abkühlung der Kernschmelze im Ausbreitungsraum 19 erreicht.

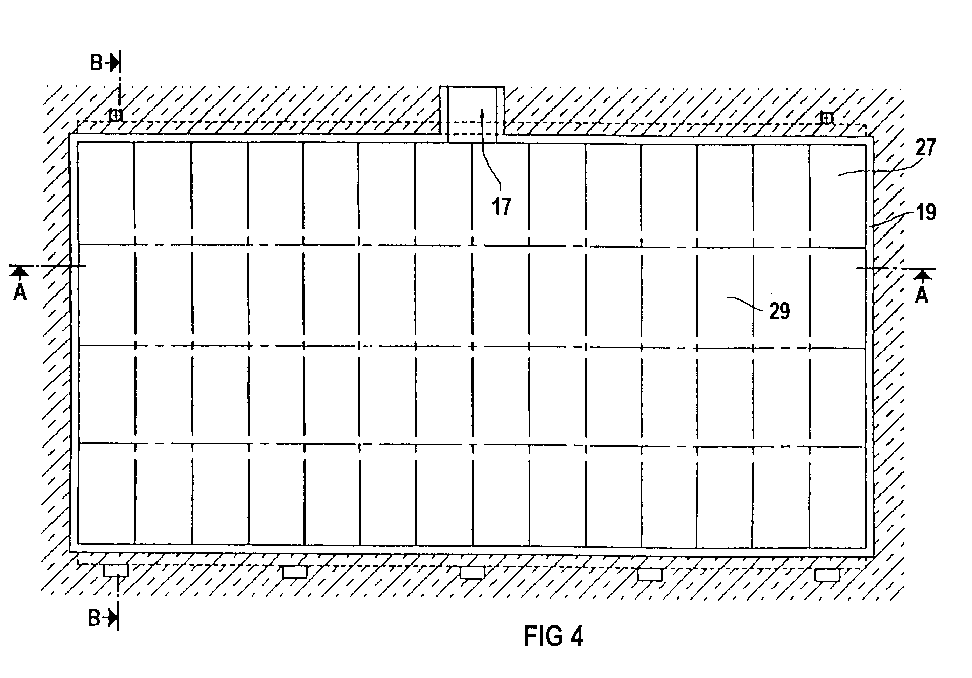

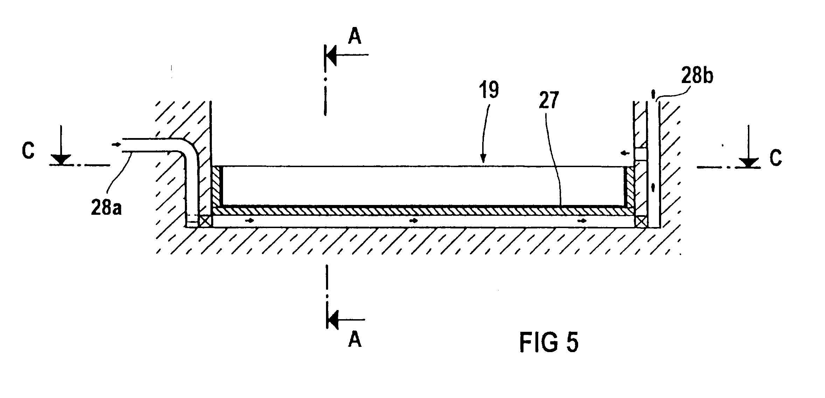

FIG 4,5 und 6 zeigen eine alternative rechteckig ausgeführte Ausbreitungskammer 19, deren Bodenbereich 27 als Kühlboden ausgebildet ist. Es können auch andere beliebige oder technisch erforderliche Formen für die Ausbreitungskammer 19 gewählt werden. Der Bodenbereich ist dabei nach unten hin nach Art von Kühlrippen ausgestaltet, die vom Kühlmittel der Kühleinrichtung 21 durchströmt sind. Auf diese Weise ist eine rasche Abfuhr der Restwärme der Kernschmelze möglich. Die kühlrippenartige Struktur des Bodenbereichs 27 weist eine sehr stabile bauliche Struktur auf, so daß die Last der Kernschmelze gut getragen werden kann. Gemäß FIG 5 ist mit den Pfeilen der Fluß des Kühlmittels angedeutet, wobei die Rohrenden 28a und 28b den Enden 24 bzw. 26 der Kühlmittelleitung 23 aus FIG 2 entsprechen.

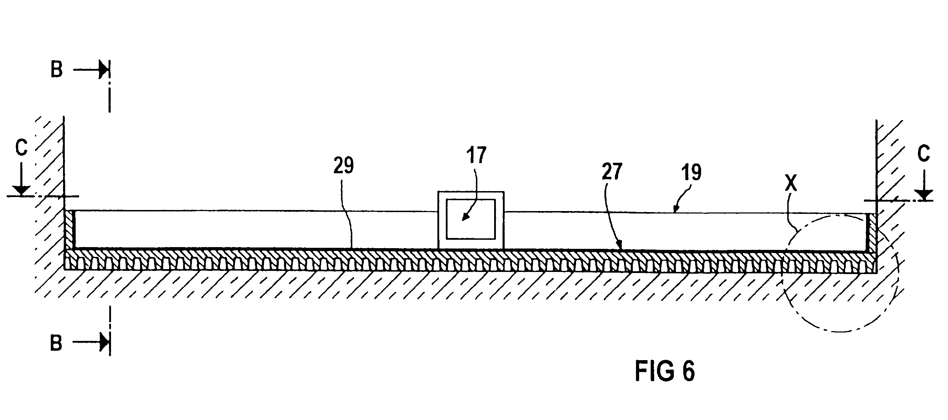

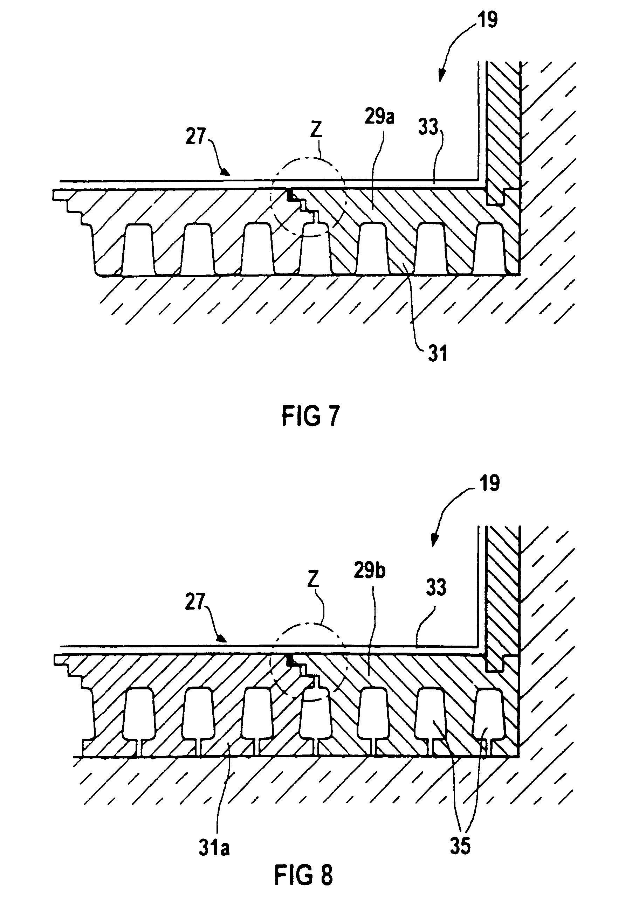

Wie aus der Draufsicht auf den Bodenbereich 27 aus FIG 4 zu erkennen ist, kann der Bodenbereich 27 bevorzugt von Bodenelementen 29 gebildet sein. Auf diese Weise ist eine bessere Transportierbarkeit und Handhabbarkeit gegeben. Dadurch können auch für verschieden große Ausbreitungsräume standardmäßige Bodenelemente 29 verwendet werden. In den nachfolgenden FIG 7 bis 13 sind weitere Details und Einzelheiten zu den Bodenelementen 29 beschrieben. Die FIG 7,8 und 9 zeigen zunächst alternative Vorschläge für Bodenelemente entsprechend dem Detail X aus FIG 6.

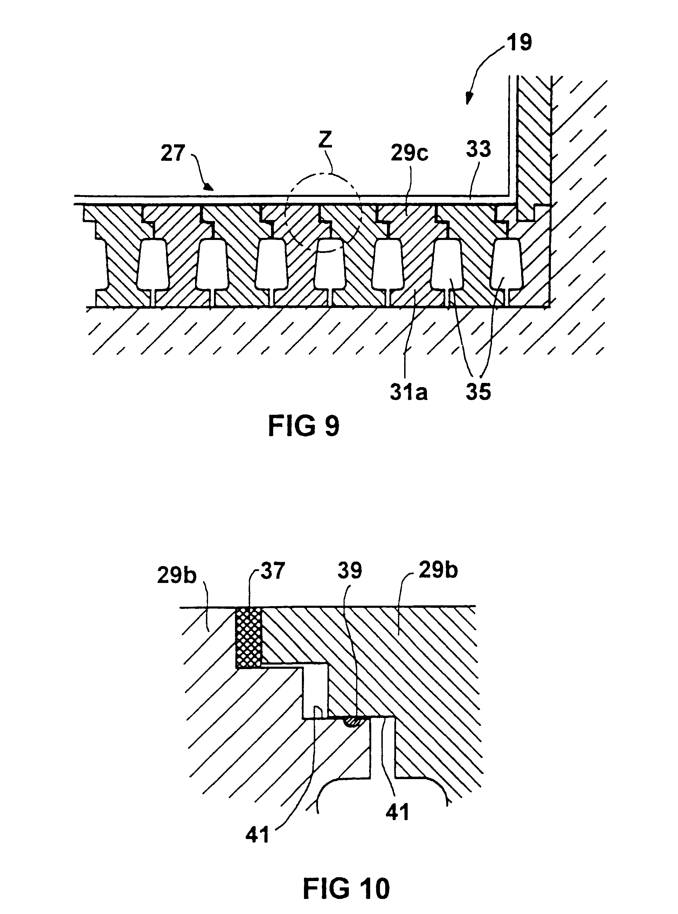

Das erste Bodenelement 29a gemäß FIG 7 steht beispielsweise auf kühlrippenähnlichen Stegen 31. Das Material der Bodenelemente 29 ist dabei auch bevorzugt ein Material mit hoher Wärmeleitfähigkeit. Auf das Detail Z, das die Verbindungstechnik oder -struktur zwischen den Bodenelementen 29 zeigt, wird später im Detail bei der Beschreibung der FIG 10 bis 13 näher eingegangen. Dies gilt auch für die Bodenelemente gemäß FIG 8 und 9.

Gegebenenfalls können die Bodenelemente 29a bis 29c auf ihrer der Kernschmelze zugewandten Seite mit einem Belag 33 versehen sein, der bevorzugt eine Penetration der Bodenelemente 29 verhindert. Der Belag 33 kann jeweils auf den Bodenelementen 29 angebracht sein oder auch nachträglich als durchgehender Belag auf die bereits verlegten Bodenelemente 29 aufgebracht werden.

Bei der Ausführung der Bodenelemente 29b gemäß FIG 8 sind die nach Art von Kühlrippen ausgestalteten Stege 31a an ihrer Unterseite stempelartig ausgebildet, so daß ein besserer Stand der Bodenelemente 29b gegeben ist. Darüber hinaus ist die effektiv gekühlte Fläche in den von den Rippen 31a gebildeten Kanälen 35 gegenüber der Ausführung gemäß FIG 7 vergrößert, wodurch die Kühlwirkung verbessert ist. Die Verbindungstechnik zwischen den Kühlelementen 29b gemäß dem Detail Z entspricht der in FIG 10.

Die Bodenelemente 29c gemäß FIG 9 unterscheiden sich zu denen aus FIG 8 durch eine alternative Verbindungstechnik, sowie ein anderes Unterteilungsmaß. Es ist dabei denkbar, daß beispielsweise die Bodenelemente 29b aus FIG 8 rechteckig gemäß der Draufsicht aus FIG 4 ausgebildet sind. Die Bodenelemente 29c gemäß FIG 9 können dagegen als lange Profilelemente ausgebildet sein, die gegebenenfalls die Ausbreitungskammer 19 auf ihre vollen Länge auffüllen.

Wesentliche Beachtung bei der Ausgestaltung der Bodenelemente 29a bis 29c ist dabei der Verbindungstechnik oder -struktur zwischen den Bodenelementen zu schenken. Einerseits müssen diese eine Dichtwirkung aufweisen, so daß die Kernschmelze mit dem Kühlmedium nicht in Verbindung kommen kann. Andererseits müssen die Elemente mechanisch fest ineinander greifen, so daß eine mechanisch tragfähige Struktur gegeben ist. Weiterhin müssen durch die auftretenden Temperaturunterschiede und Temperaturzustände die Ausdehnung der Elemente ausgeglichen werden.

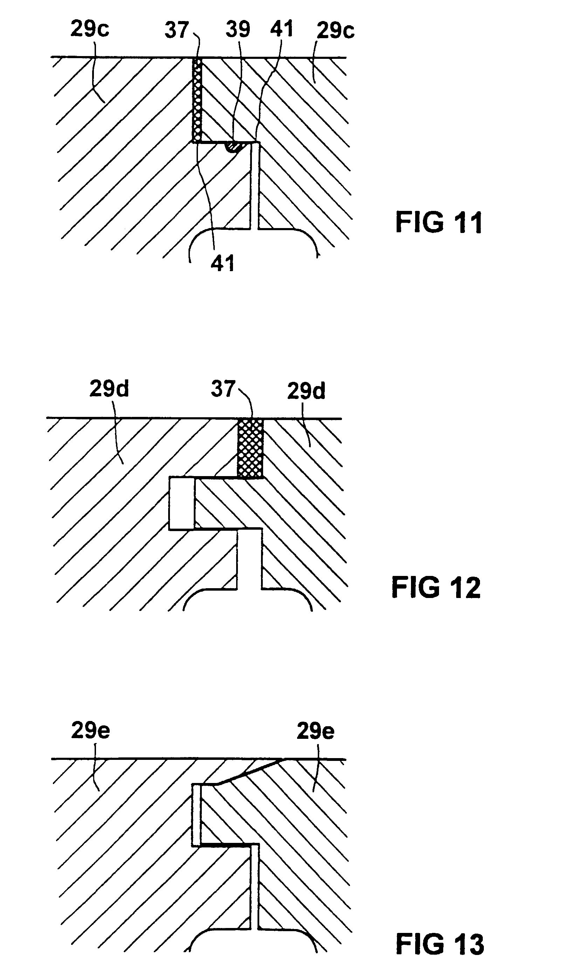

Die in den FIG 10 bis 13 aufgezeigten Möglichkeiten unterteilen sich zunächst in Stufenverbindungen (FIG 10,11) und in Nut- und Federverbindungen (FIG 12 und 13). Dabei ist allen Ausführungen gemeinsam, daß zur oberen Seite hin eine Dichtwirkung erzielt werden muß. Dies wird bei den Ausführungen nach FIG 10,11 und 12 durch ein Füllmaterial 37 erzielt, das einen gegebenenfalls vorhandenen Spalt zwischen den Bodenelementen 29 ausfüllt. Das Füllmaterial 37 erfüllt dabei zwei Funktionen. Einerseits hat es eine Dehnfugenwirkung und andererseits erfüllt es eine Dichtwirkung.

Zusätzlich kann beispielsweise ein Dichtelement 39 vorgesehen sein, das zwischen zwei aneinanderliegenden Flächen 41 angeordnet ist. Hier steht die Funktion der Dichtwirkung im Vordergrund. Bei der Ausführung gemäß FIG 12 ist auf ein Dichtelement verzichtet, da durch die Nut- und Federausbildung der Verbindungstechnik ein Labyrinth geschaffen ist, das die erforderliche Dichtwirkung aufweist.

Bei der Ausführung gemäß FIG 13 kann zusätzlich auch auf das Füllmaterial verzichtet werden, da durch die angeschrägte Ausbildung der Nut-und Federverbindung ein Eindringen von Kernschmelze in den Zwischenraum zwischen zwei Bodenelementen verhindert ist. Darüber hinaus ist hier auch eine Labyrinthwirkung gegeben, so daß die erforderliche Dichtigkeit ebenfalls erzielt ist. Bei dieser Ausführung ist durch den fertigungstechnisch höheren Aufwand eine Einsparung beim Zusatzmaterial möglich.

## Patentansprüche

1. Einrichtung zum Auffangen von Kernschmelze aus einem Reaktordruckbehälter (1)
a) mit einer unterhalb des Reaktordruckbehälters (1) angeordneten Vorkammer (11),
b) mit einer seitlich neben dem Reaktordruckbehälter (1) angeordneten Ausbreitungskammer (19) für die Kernschmelze, wobei die Ausbreitungskammer (19) über einen Kanal (17) mit der Vorkammer (11) verbunden ist, und
c) mit einem Sockelkörper (9), der den Bodenbereich zumindest der Vorkammer (11) bildet, **dadurch gekennzeichnet**, daß der Sockelkörper (9) aus einem Material gefertigt ist, dessen Wärmeleitfähigkeit derartig hoch bemessen ist, daß nach dem Auftreffen der Kernschmelze auf dem Sockelkörper (9) ein Teil der Kernschmelze eine Kruste auf dem Sockelkörper (9) bildet und dann der Rest der Kernschmelze auf der Oberfläche der Kruste zur Ausbreitungskammer (19) hin fließt.

2. Einrichtung nach Anspruch 1, **dadurch gekennzeichnet**, daß der Sockelkörper (9) aus Metall gefertigt ist.

3. Einrichtung nach Anspruch 1 oder 2, **dadurch gekennzeichnet**, daß der Sockelkörper (9) aus Teilkörpern zusammengesetzt ist.

4. Einrichtung nach einem der Ansprüche 1 bis 3, **dadurch gekennzeichnet**, daß der Sockelkörper (9) vorkammerseitig tiegelartig ausgestaltet ist.

5. Einrichtung nach einem der Ansprüche 1 bis 4, **dadurch gekennzeichnet**, daß der Sockelkörper (9) Kühlmittel (21) umfaßt.

6. Einrichtung nach einem der Ansprüche 1 bis 5, **dadurch gekennzeichnet**, daß zumindest die Vorkammer (11) und gegebenenfalls der Kanal (17) mit Füllkörpern (13) ausgefüllt sind.

7. Einrichtung nach einem der Ansprüche 1 bis 6, **dadurch gekennzeichnet**, daß die Bodenflächen (25) von Kanal (17) und/oder Ausbreitungsraum (19) von gekühlten Bodenelementen (29 bis 29e) gebildet sind.

8. Einrichtung nach Anspruch 7, **dadurch gekennzeichnet**, daß die Bodenelemente (29 bis 29e) an ihren Verbindungsstellen Nut- und Federverbindungen oder eine stufenartige Verbindung aufweisen.

9. Einrichtung nach einem der Ansprüche 7 oder 8, **dadurch gekennzeichnet**, daß zwischen den Bodenelementen (29 bis 29e) jeweils eine flexible Dichtung (39) zwischengeschaltet ist.

## Claims

1. Device for collecting core melt from a reactor pressure vessel (1),
a) with a prechamber (11) arranged below the reactor pressure vessel (1),
b) with a spreading chamber (19) for the core melt which is arranged laterally next to the reactor pressure vessel (1), the spreading chamber (19) being connected to the prechamber (11) via a channel (17), and
c) with a base unit (9) which forms the bottom region at least of the prechamber (11),
characterized in that the base unit (9) is made of a material whose thermal conductivity is of such a high value that after the core melt has reached the base unit (9), some of the core melt forms a crust on the base unit (9) and then the rest of the core melt flows along the surface of the crust to the spreading chamber (19).

2. Device according to Claim 1, characterized in that the base unit (9) is made of metal.

3. Device according to Claim 1 or 2, characterized in that the base unit (9) is composed of subunits.

4. Device according to one of Claims 1 to 3, characterized in that the base unit (9) is designed on the prechamber side in the manner of a crucible.

5. Device according to one of Claims 1 to 4, characterized in that the base unit (9) comprises cooling means (21).

6. Device according to one of Claims 1 to 5, characterized in that at least the prechamber (11), and optionally the channel (17), are filled with packing units (13).

7. Device according to one of Claims 1 to 6, characterized in that the bottom surfaces (25) of the channel (17) and/or the spreading space (19) are formed by cooled bottom elements (29 to 29e).

8. Device according to Claim 7, characterized in that the bottom elements (29 to 29e) have groove and tongue connections or a stepped connection at their connection points.

9. Device according to one of Claims 7 or 8, characterized in that a flexible seal (39) is in each case interposed between the bottom elements (29 to 29e).

## Revendications

1. Installation pour collecter le coeur en fusion d'une cuve sous pression (1) d'un réacteur, comprenant
a) un compartiment préalable (11) disposé au-dessous de la cuve sous pression (1) du réacteur,
b) une chambre de propagation (19) destinée au coeur en fusion et jouxtant latéralement la cuve sous pression (1) du réacteur, la chambre de propagation (19) étant reliée au compartiment préalable (11) par l'intermédiaire d'un canal (17), et
c) un corps d'embase (9), formant la région du fond au moins du compartiment préalable (11), caractérisée par le fait que le corps d'embase (9) est fabriqué en un matériau dont la conductivité thermique est d'une valeur élevée telle que, après l'impact du coeur en fusion sur le corps d'embase (9), une partie dudit coeur en fusion forme une croûte sur ledit corps d'embase (9), puis le reste du coeur en fusion s'écoule en direction de la chambre de propagation (19), sur la surface de la croûte.

2. Installation selon la revendication 1, caractérisée par le fait que le corps d'embase (9) est fabriqué en métal.

3. Installation selon la revendication 1 ou 2, caractérisée par le fait que le corps d'embase (9) est composé de corps partiels.

4. Installation selon l'une des revendications 1 à 3, caractérisée par le fait que le corps d'embase (9) présente, du côté du compartiment préalable, une configuration du type creuset.

5. Installation selon l'une des revendications 1 à 4, caractérisée par le fait que le corps d'embase (9) englobe des moyens de refroidissement (21).

6. Installation selon l'une des revendications 1 à 5, caractérisée par le fait qu'au moins le compartiment préalable (11), et éventuellement le canal (17), sont comblés par des corps de remplissage (13).

7. Installation selon l'une des revendications 1 à 6, caractérisée par le fait que les surfaces de fond (25) du canal (17) et/ou de la chambre de propagation (19) sont formées par des éléments de fond réfrigérés (29 à 29e).

8. Installation selon la revendication 7, caractérisée par le fait que les éléments de fond (29 à 29e) comportent, dans leurs zones de liaison, des solidarisations par rainures et languettes ou une solidarisation de type gradin.

9. Installation selon l'une des revendications 7 ou 8,
caractérisée par le fait qu'une garniture d'étanchement (39) flexible est respectivement interposée entre les éléments de fond (29 à 29e).
